# EUROPÄISCHE PATENTANMELDUNG

(11) **EP 1 842 807 A1**
(43) Veröffentlichungstag der Anmeldung: **10.10.2007**
(21) Anmeldenummer: 07006678.2
(22) Anmeldetag: 30.03.2007
(51) Int. Cl.: B65G 47/51

(54) **Vorrichtung zum Transport von Flaschen**

(30) Priorität: 03.04.2006 DE 10615842
(71) Anmelder: Finnah Engineering und Packaging GmbH, 48683 Ahaus (DE)
(72) Erfinder: Vaida, Lucian, 45699 Herten (DE); Pompe, Achim, 46397 Bocholt (DE)
(74) Vertreter: Bünemann, Egon

(57) **Zusammenfassung**

Zum Transport von Flaschen, insbesondere im Bereich ihres Flaschenhalses (3) erfaßbarer PET-Flaschen, ist eine Vorrichtung als Teil einer Flaschenfüllanlage o. dgl. (A) Bearbeitungsstation vorgesehen. Damit werden die in einer Reihe gruppierten Flaschen (2') als Flaschen-Satz zu zellenbrettartig ausgebildeten Trägerleisten (5) o. dgl. Förderelementen hin verlagert und in deren jeweiligen Formausnehmungen aufgenommen. Diese auf einer Bahn umlaufenden Trägerleisten (5) bilden eine Transporteinheit mit den Flaschen, die mittels eines Förderantriebes von der Füllanlage in deren Arbeitsrichtung (F) übernehmbar und getaktet weiterförderbar ist. Bei der erfindungsgemäßen Vorrichtung sind die Flaschen (2') zum Verbinden mit der Trägerleiste (5) unterhalb dieser verlagerbar.

## Beschreibung

Die Erfindung betrifft eine Vorrichtung zum Transport von Flaschen, insbesondere PET-Flaschen, die gemäß dem Oberbegriff des Anspruchs 1 in eine Flaschenfüllanlage o. dgl. Bearbeitungsstationen eingefördert werden.

Bei bekannten Transportvorrichtungen dieser Art (DE 197 02 770 A1) werden die Flaschen mittels eines Förderers erfaßt, der aus einer Vielzahl von Tragleisten mit Aufnahmeschlitzen aufgebaut ist, in denen die jeweiligen Flaschenhälse durch eine horizontale Einschubbewegung kammartig aufnehmbar sind. Gemäß DE 197 00 263 A1 ist eine Vorrichtung zum Vereinzeln von Flaschen gezeigt, bei der auf einem Band zugeführte Flaschen ebenfalls einer kammartigen Trenneinrichtung zugeführt werden und in deren Aufnahmeschlitzen die jeweiligen Flaschenhälse für den Weitertransport fixierbar sind. Bei einer Vereinzelungsvorrichtung gemäß DE 197 16 779 C2 werden die in einer Reihe geförderten Flaschen mittels eines eine schraubenlinienförmige Nut aufweisenden Drehkörpers jeweils am Flaschenhals erfaßt, entsprechend dem Steigungsmaß weitergegeben und damit in konstantem Abstand so positioniert, daß die Flaschenhälse einem Transporteur im Bereich jeweiliger U-förmig offener Aufnahmekonturen übergebbar sind. Bei einer Vorrichtung zum Transport von Flaschen gemäß DE 298 21 746 sind zellenbrettartige flache Trägerleisten als Förderelemente vorgesehen, in denen die Flaschenhälse mittels jeweiliger als L-förmige Führungsbahnen geformter Aufnahmekonturen erfaßbar sind.

Gemäß EP 1 129 985 A1 ist zum Transport der zur Befüllung vorgesehenen Flaschen ein Förderelement vorgesehen, das zwei komplementäre Tellerplatten aufweist, wobei die Flaschenhälse zwischen bogenförmigen Aussparungen im Bereich einer Teilungsebene zwischen den beiden Tellerplatten aufnehmbar sind. Diese Tellerplatten gelangen bei der Förderbewegung entlang eines vertikalen Seitentrums und eines horizontalen Untertrums in einen Übergangsbereich des Förderers, wobei hier die Tellerplatte in der Teilungsebene aufspreizbar und damit die Flaschen im Bereich des Halses zwischen die zwei Aufnahmebögen einlegbar sind. Gemäß DE 102 58 703 B4 ist eine Füllvorrichtung für Flaschen vorgesehen, wobei die Flaschen im Bereich ihres einen Schraubverschluß aufweisenden Halses ebenfalls durch eine halbkreisförmige Aussparung aufweisende Teilplatten erfaßt werden.

Die Erfindung befaßt sich mit dem Problem, eine Vorrichtung zum Transport von Flaschen so auszubilden, daß ein in eine Bearbeitungsstation einzuführender Flaschen-Satz mit hohen Taktfrequenzen handhabbar ist, dabei mit geringem technischem Aufwand eine schnelle Anpassung an variierende Bearbeitungsaufgaben möglich ist und die Vorrichtung insgesamt bei geringem Raumbedarf in ein nachgeordnete Stationen aufweisendes Fördersystem integrierbar ist.

Die Erfindung löst diese Aufgabe durch eine Transportvorrichtung mit den Merkmalen des Anspruchs 1. Hinsichtlich weiterer Vorteile wird auf die Ansprüche 2 bis 22 verwiesen.

Die Transportvorrichtung verwendet zur Handhabung der jeweils bereitgestellten Flaschen-Sätze eine an sich bekannte Förderbaugruppe, deren als Basisteile vorgesehene Trägerleisten eine Mitnahme der PET-Flaschen o. dgl. Kunststoff-Flaschen dadurch ermöglichen, daß diese im Bereich des Flaschenhalses erfaßt werden. Erfindungsgemäß weisen diese Trägerleisten Aufnahmekonturen auf, die als jeweilige Durchlaßöffnungen mit geschlossenem Umfangsrand ausgebildet sind. Aufbauend auf dieser Ausführung der als verändertes Basisteil vorgesehenen Trägerleisten sind im Bereich der Flaschenzuführung, -erfassung und -weitergabe jeweilige Baugruppen so kombiniert, daß ein neues Maschinenkonzept mit verbessertem Bewegungsablauf und erhöhter Leistung erreicht ist.

Die als Flaschen-Sätze gruppierten Flaschen werden bei dem erfindungsgemäßen System unterhalb der Trägerleisten zugeführt und erst danach wird aus dieser unteren Position eine Verbindungs- und Transportstellung zu den Trägerleisten hergestellt. Prinzipiell ist dabei auch denkbar, an sich bekannte Trägerleisten mit beispielsweise schlitzförmigen Aufnahmen zu verwenden und diese mit der unteren Zuführung zu kombinieren.

Mit dieser Zuführung der Flaschen von unten in die Trägerleiste ist eine vom Förder-Takt der nachgeordneten Flaschenabfüllanlage weitgehend unabhängige Bereitstellung der Flaschen-Sätze möglich, da diese auch mehrreihig unter der Arbeitsebene der Bearbeitungsanlage bereitstellbar und in deren Arbeitsrichtung mit zeitversetztem Takt weitergebbar sind. Durch eine dabei parallele Bereitstellung von Trägerleisten-Flaschen-Einheiten mittels synchron in die Trägerleisten eingeführter Flaschen-Sätze können diese Einheiten in eine vom Förder-Takt der nachgeordneten Anlage weitgehend entkoppelbare Beruhigungslage gebracht werden. Daran anschließend werden die jeweils vorderen Flaschen-Sätze beim Weitertransport dieser Tragleisten-Transporteinheiten mit erhöhter Taktanzahl abgenommen und die Durchsatzleistung der Anlage ist durch eine angepaßte Steuerung erhöht,

Diese in Arbeitsrichtung der Füllanlage nach Art einer umlaufenden Gliederkette beweglichen zellenbrettartigen Trägerleisten sind so konzipiert, daß die insbesondere als geordnete Reihe in einer horizontalen Querrichtung unter ein Arbeitstrum der Füllanlage zugeführten Flaschen durch eine zwischen diesen und der Trägerleiste erzeugte vertikale Relativbewegung in eine an sich bekannte Mitnahmestellung verlagerbar sind und danach der in den jeweiligen Aufnahmeöffnungen fixierbare Flaschen-Satz in die nachgeordnete Flaschenfüllanlage übergebbar ist.

Die Positionierung der Flaschen in der oder den Flaschenreihe(n) erfolgt dabei in einem der Bewegungsbahn der Trägerleisten vorgelagerten Sortierbereich, wobei die Flaschen bereits während der Zuführung durch kontinuierlich arbeitende Zuführeinheiten mit hoher Geschwindigkeit verlagerbar sind und dabei jeweilige Flaschen-Sätze gebildet werden. Die anschließende Zuführung des Flaschen-Satzes in die Trägerleiste ist nur noch durch eine kurze Hubbewegung bzw. Verlagerung der Flaschenhälse im Bereich der Trägerleiste bzw. deren Aufnahmeöffnungen bestimmt. Damit ist das System mit geringem Aufwand auch bei einer Erhöhung der Durchsatzleistung einsetzbar und durch variable Frequenzen schnell an jeweilige Takte beim Füllvorgang anpaßbar.

Bei der vertikalen Verlagerung der Flaschenhälse in die randseitig vollständig geschlossenen Aufnahmeöffnungen können die Flaschen dadurch fixiert werden, daß am Flaschenhals jeweiliger PET-Flaschen vorgesehene Profilierungen in Form von Tragringen o. dgl. Ansätzen nach Art einer Haltekante wirksam werden, die in der Verbindungsphase durch ein in die Aufnahmeöffnung vorstehendes Formteil elastisch verformt wird und danach die hängende Position der Flasche durch den zurückverlagerten Ansatz gesichert ist. Damit sind zusätzliche Halterungen entbehrlich und die Tragleiste insgesamt mit geringen Gestehungskosten bereitstellbar.

In zweckmäßiger Ausführung ist vorgesehen, daß die Flaschen oberseitig bis in die Aufnahmeöffnungen der Tragleisten verlagert und erst danach die Flaschenhälse zur Bildung der Halterung erfaßt und positioniert werden. Die für diese Flaschen-Bewegung vorgesehenen Förderorgane sind dabei so ausgebildet, daß die Flaschen im Bereich der Aufnahmeöffnung in eine als erweiterter Teilbereich vorgesehene Halteöffnung eingeschoben werden. Diese Halteöffnung weist einen gegenüber dem Zuführbereich der Aufnahmeöffnung kleineren Durchmesser auf, so daß im Übergang zwischen den beiden Öffnungsbereichen vorstehende Konturbereiche eine elastische Verformung am Flaschenhals bewirken können und danach die Position der in den Bereich der Halteöffnung verlagerten Flaschen nach Art einer Rastverbindung gesichert ist.

Diese Handhabung der zugeführten Flaschen bzw. Flaschen-Sätze kann auf kleinstem Bewegungsraum erfolgen, so daß eine überaus kompakte Ausführung der Vorrichtung erreichbar ist und diese mit ihren Funktionselementen auch zwischen die die Arbeitsrichtung der Füllanlage vorgebenden beiden Bewegungstrums der Trägerleisten-Bahn integrierbar ist.

Weitere Einzelheiten und Wirkungen ergeben sich aus der nachfolgenden Beschreibung und den Zeichnungen, in denen zwei Ausführungsbeispiele des Gegenstands der Erfindung schematisch näher veranschaulicht sind. In der Zeichnung zeigen:
- Fig. 1: eine Seitenansicht einer Flaschenfüllanlage mit in deren Zufühtbereich vorgesehener Transportvorrichtung für Flaschen,
- Fig. 2: eine Stirnansicht der Füllanlage gemäß einer Linie II-II in Fig. 1,
- Fig. 3: eine Draufsicht der Transportvorrichtung gemäß Fig. 1,
- Fig. 4: eine perspektivische Einzeldarstellung der die Transportvorrichtung bildenden Baugruppen,
- Fig. 5: eine vergrößerte Ausschnittsdarstellung im Zuführbereich der Flaschen bei Bildung von Flaschensätzen,
- Fig. 6: eine Einzeldarstellung einer zweiten Ausführung der Übergabeeinheit, und
- Fig. 7 bis Fig. 9: eine zweite Ausführung der Transportvorrichtung in Ansichten ähnlich Fig. 1 bis 3 mit unter der Tragleiste befindlicher Hubeinheit.

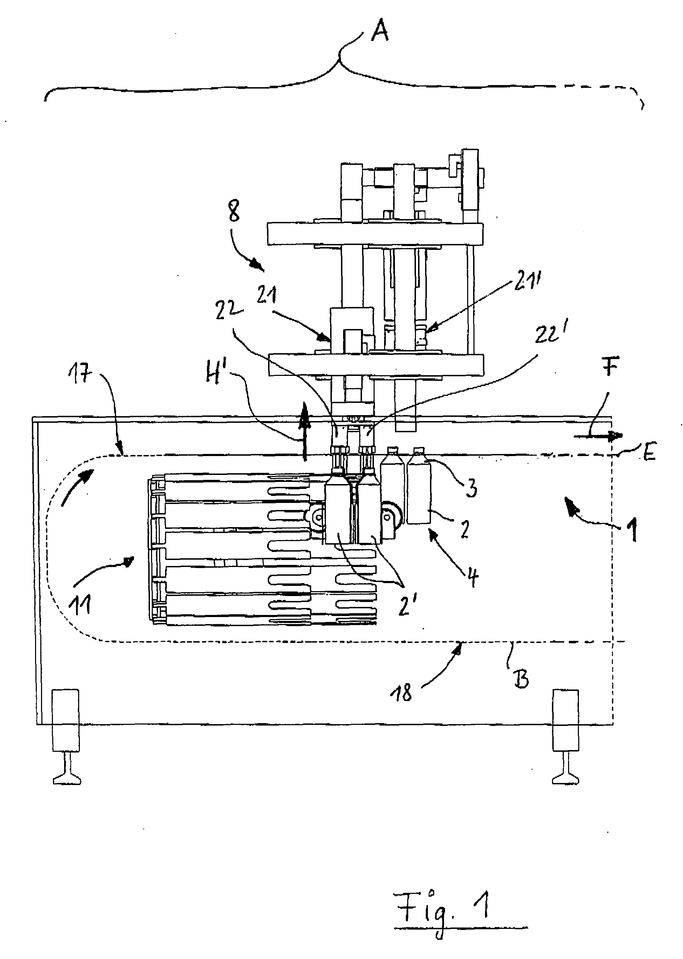

In Fig. 1 ist ein Teilbereich einer insgesamt mit A bezeichneten Bearbeitungsanlage, insbesondere eine Flaschenfüllanlage, dargestellt, die eine eine Transportvorrichtung 1 für Flaschen 2 aufweisende Flaschenaufgabestation bildet.

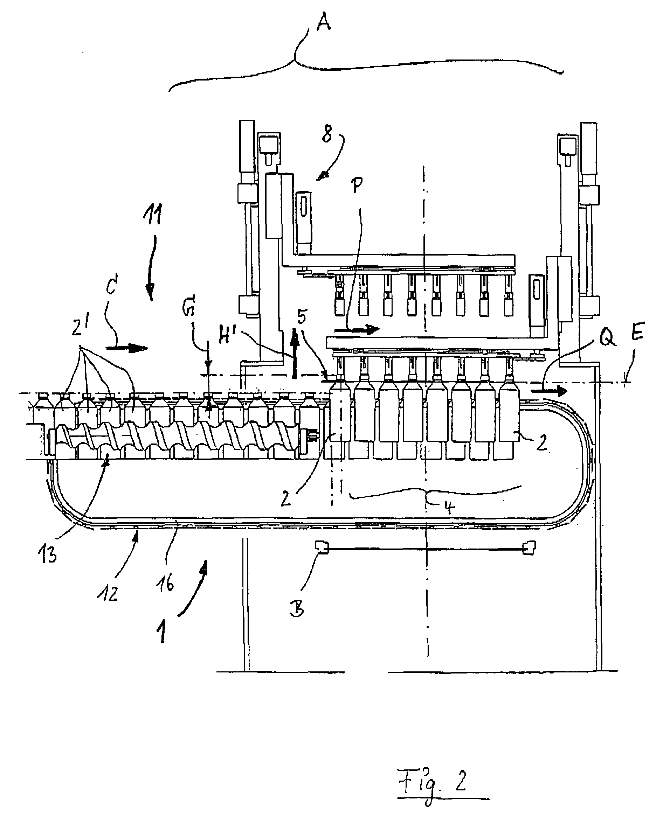

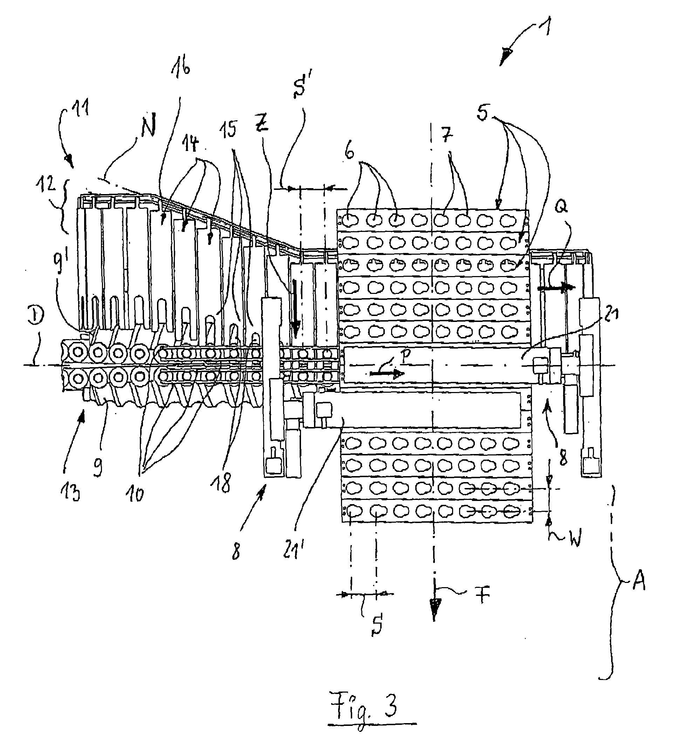

Die Transportvorrichtung 1 ist insbesondere zum Handhaben von PET-Flaschen 2 vorgesehen, wobei diese im Bereich ihres Flaschenhalses 3 erfaßbar und in die Flaschenfüllanlage A einführbar sind. Die Zusammenschau von Fig. 1 und 2 zeigt, daß die bei der Zuführung in einer Reihe gruppierten, mit 2' bezeichneten Flaschen als jeweiliger Flaschen-Satz 4 mit nach oben gerichteten Flaschenhälsen 3 angeordnet werden und im Bereich der Transportvorrichtung 1 in den Bereich von Trägem o. dgl. eine Bahn B bildenden Förderelementen gelangen. Diese allgemein bekannten Träger (DE 298 21 746) sind insbesondere in Form von zellenbrettartig ausgebildeten Trägerleisten 5 vorgesehen (Fig. 3), in denen die Flaschen 2 mittels Formausnehmungen aufnehmbar sind. Diese auf der Bahn B in der Flaschenfüllanlage A umlaufenden Trägerleisten 5 bilden damit mit den Flaschen 2 eine Transporteinheit, die mittels eines nicht näher dargestellten Förderantriebes in dessen Arbeitsrichtung (Pfeil F) von der Füllanlage A übernehmbar sind. Dabei werden diese Transporteinheiten entsprechend den nicht näher dargestellten Bearbeitungsstationen der Flaschenfüllanlage A getaktet in der Arbeitsrichtung F weitergefördert.

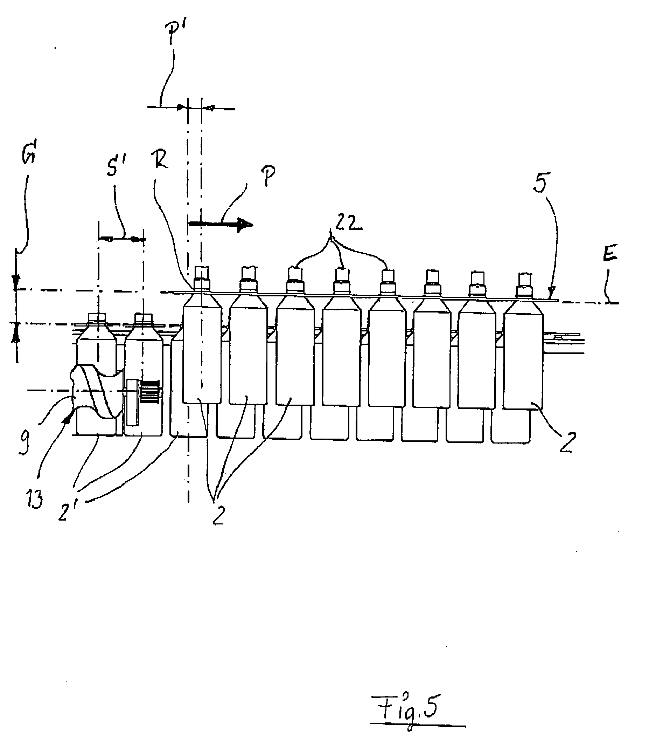

Die Transportvorrichtung 1 ist in erfindungsgemäßer Ausführung so konzipiert, daß die Flaschen 2 bzw. die Flaschen-Sätze 4 vor ihrer Aufnahme in der Trägerleiste 5 eine unterhalb deren Förderebene E befindliche Position einnehmen (Fig. 2, Fig. 5). Aus dieser Position gelangen die Flaschenhälse 3 in die Trägerleisten 5, wobei diese nunmehr als Formausnehmungen jeweilige Aufnahmeöffnungen 6 mit geschlossener Randkontur aufweisen (Fig. 3). Diese bevorzugt anwendbaren Aufnahmeöffnungen 6 sind damit zur Aufnahme des Flaschenhalses 3 nach Art eines Schlüsselloches so gestaltet, daß während und nach der Zuführung der Flasche 2 unterschiedliche Hub-, Schub-, Schwenk- und/oder Rastbewegungen denkbar sind, mit denen die Festlegung des Flaschenhalses 3 in einer transportsicheren Lage erreichbar ist und dabei zusätzliche Halteelemente entbehrlich sind.

Die Zusammenschau von Fig. 1 bis 4 verdeutlicht eine prinzipielle Funktion der Transportvorrichtung 1, wobei die Flaschen 2 in einer quer zur Arbeitsrichtung F der Füllanlage A gerichteten Reihe ausrichtbar sind (Pfeil C, Fig. 2). Aus dieser Zuführ-Reihe ist der an die Übernahme-Reihe von insbesondere acht Aufnahmeöffnungen 6 der Trägerleiste 5 angepaßte Flaschen-Satz 4 auswählbar und wird dazu unterhalb der Trägerleiste 5 positioniert. Ausgehend von dieser Zuführlage sind die Flaschenhälse 3 zumindest teilweise in den jeweiligen Aufnahmeöffnungen 6 aufnehmbar und in deren Bereich fixierbar. Die so gebildete Transporteinheit wird dann weiterbewegt (Pfeil F), wobei die Flaschenhälse bzw. -öffnungen oberhalb der Trägerleiste 5 zugänglich sind.

Für die vorgesehene Funktion der Flasche>nfüllanlage A mit hängenden Flaschen 2 versteht es sich, daß die im Bereich der Aufnahmeöffnung 6 befindlichen Flaschenhälse 3 zumindest teilweise über die Randkontur der Aufnahmeöffnung 6 nach oben vorsteht, so daß in nachfolgenden Bearbeitungsstationen eine einfache Handhabung möglich wird, Für diesen Transport bzw. die Handhabung ist es erforderlich, daß die Flaschen 2 jeweils im Bereich der Aufnahmeöffnung 6 der Trägerleiste 5 in einer transportsicheren Lage fixiert sind. Für den dargestellten hängenden Weitertransport der Flaschen 2 sind in den Aufnahmeöffnungen 6 jeweilige die Verbindungsposition sichernde Formansätze 7 vorgesehen (Fig. 3), wobei weitgehend variable Ausführungen denkbar sind.

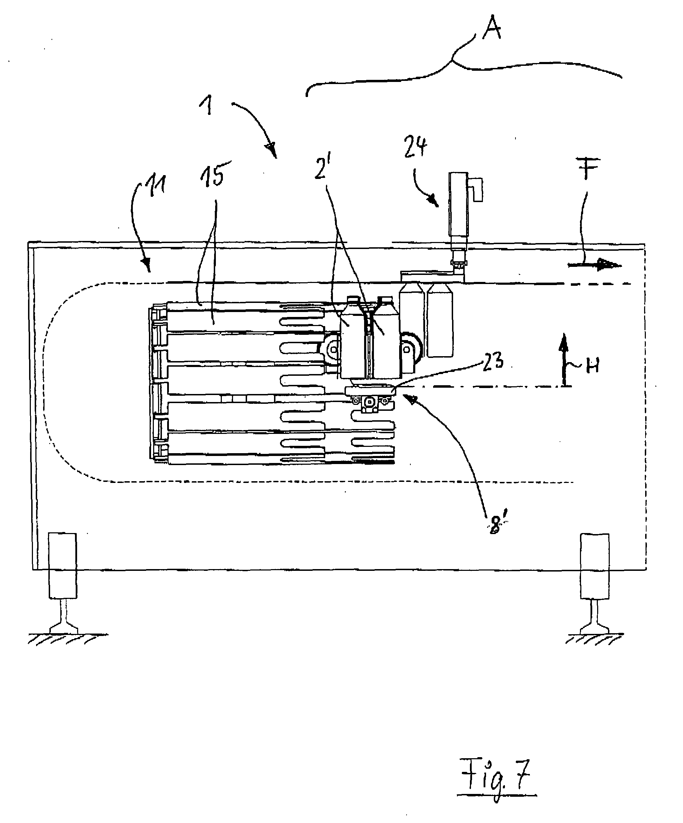

Die in Fig. 1 in Richtung der Zeichnungsebene zugeführten Flaschen 2' bilden den Flaschen-Satz 4 (Fig. 2), der in zumindest einer Takt-Phase der Füllanlage A unter der jeweiligen Trägerleiste 5 gehalten ist. In einer ersten Ausführungsform dieser Haltelage (Fig. 7) ist vorgesehen, daß der Flaschen-Satz 4 im Bereich der jeweiligen Flaschenböden 3' erfaßt wird, dabei über den Flaschenhälsen 3 die jeweilige Trägerleiste 5 zuführbar und diese in die die Flaschenhälse 3 mit den Aufnahmeöffnungen 6 verbindende Transportstellung absenkbar ist (nicht dargestellt).

Bei der in Fig. 7 dargestellten Ausführung der Transportvorrichtung 1 ist vorgesehen, daß der unter der Trägerleiste 5 bzw. deren Aufnahmeöffnung 6 positionierte Flaschen-Satz 4 mittels einer als Hubeinheit 8' wirksamen Zusatzbaugruppe anhebbar ist und von unten in die Aufnahmeöffnungen 6 eingeführt wird (Pfeil H). In einer weiteren Ausführung ist denkbar, daß der als Reihe ausgerichtete Flaschen-Satz 4 und die darüber befindliche Trägerleiste 5 durch gleichzeitige Hubbewegungen gegenläufig in die Verbindungsstellung verlagerbar sind (nicht dargestellt).

Bei der Transportvorrichtung 1 gemäß Fig. 1 bis 4 ist ein Konzept verwirklicht, bei dem der unterhalb der Trägerleiste 5 im Bereich deren Aufnahmeöffnungen 6 zugeführte Flaschen-Satz 4 durch eine oberhalb der Trägerleiste 5 befindliche Hubeinheit 8 erfaßt wird und von dieser der Flaschen-Satz 4 in die dargestellte Verbindungsstellung in die Aufnahmeöffnungen 6 anhebbar ist (Pfeil H'). Diese Hubeinheit 8 ist dabei so konzipiert, daß die in den Bereich der Aufnahmeöffnungen 6 verlagerten Flaschen 2 bzw. Flaschenhälse 3 auch horizontal bewegbar sind (Pfeil P bzw. Abstand P') und mit dieser Bewegung die mit einem Tragring R geformten Flaschenhälse 3 in die jeweilige hängende Fixierstellung überführbar sind (Fig. 5).

Die Zusammenschau von Fig. 2 und 3 verdeutlicht die unterhalb der Trägerleiste 5 vorgesehene Zuführung der Flaschen 2', wobei diese ausgehend von einer weitgehend ungeordneten Lage quer zur Arbeitsrichtung F der Füllanlage A zugeführt werden (Pfeil C, Fig. 2, linke Seite). Im Bereich einer Zuführebene D wirken zwei an sich bekannte Förderschnecken 9, 9' als Förderer 13 mit entsprechenden Führungsleisten 10 (Fig. 3) zusammen. Diesem Schnecken-Förderer 13 kann ein nicht dargestellter Band- oder Kettenförderer vorgeordnet sein, mit dem die Flaschen 2' in gestauter Aneinanderlage verlagert, mittels verstellbarer Führungen entsprechend der Höhe und dem Durchmesser einstellbar und dann dem Schneckensystem zuführbar sind. Das Schneckensystem 13 hat die Aufgabe, die Flaschen 2' auf einen definierten Abstand (Maß: S'; entsprechend Maß S in den Zellenbrettern, Fig. 3) zu separieren. Die Zuführung gemäß Pfeil C erfolgt wahlweise einreihig über eine Schnecke (nicht dargestellt) oder zweireihig bzw. mehrreihig über zwei oder mehr gegenläufige Schnecken 9, 9'. Die Schnecken 9, 9' werden für ein entsprechendes Flaschen-Format gefertigt und von je einem Servomotor angetrieben. Die Schnecken 9, 9' sind sowohl über die Mitte der Flaschen 2 zustellbar als auch in der Höhe verstellbar, wobei eine obere Führung einstellbar am Kopf der Flasche 2' erfolgt.

Teilweise parallel zu diesen Förderschnecken 9, 9' ist eine Übergabeeinheit 11 mit der Transportvorrichtung 1 verbunden, wobei mittels dieser Übergabeeinheit 11 die einzelnen Flaschen 2' als der Flaschen-Satz 4 gruppiert und dabei auf ein jeweiliges von den Aufnahmeöffnungen 6 der Trägerleisten 5 vorgegebenes Abstands-Stichmaß S (Fig. 3) einstellbar sind. Mit dieser Übergabeeinheit 11 erfolgt damit eine lagegenaue Positionierung des Flaschen-Satzes 4 unter der jeweiligen in Arbeitsrichtung F zugeführten Trägerleiste 5 (Fig.'4, Fig. 1), wobei ein Höhenabstand G (Fig. 2) besteht, der im System mit weitgehend variablem Maß vorgebbar ist. Ausgehend von dieser Position erfolgt die vorbeschriebene Verlagerung der Flaschenhälse 3 in die Trägerleiste 5 durch entsprechende Relativbewegung (H, H') der gesteuerten Baugruppen des Systems.

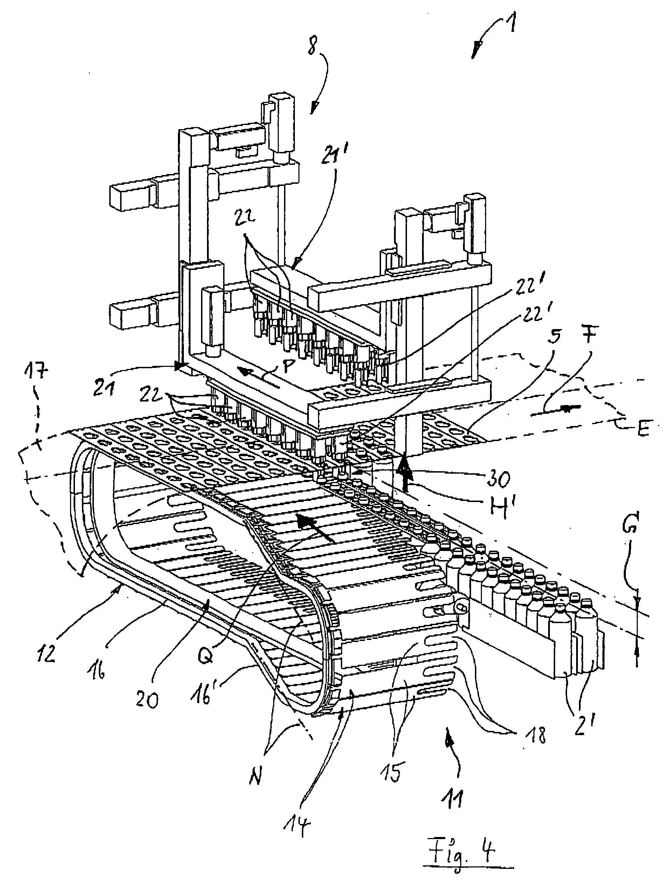

Die Übergabeeinheit 11 ist zur Übernahme der Flaschen 2' mit einem eine Zuführbahn N aufweisenden verlagerbaren Querförderer 12 versehen, mit dem die jeweils 1-reihig oder mehrreihig vom Förderer 13 bereitgestellten Flaschen 2' erfaßbar sind. In der dargestellten Ausführung (Fig. 3, Fig. 4) wird deutlich, daß die Übergabeeinheit 11 mit einem die zugeführten Flaschen 2' 2-reihig übernehmenden Querförderer 12 versehen ist, der jeweilige aneinandergereihte Kettenglieder 14 mit Aufnahmegabeln 16 aufweist, die auf einer Förderbahn 16 (Fig. 2) umlaufen. Diese Förderbahn 16 ist dabei so konzipiert, daß auf engem Raum zwischen Obertrum 17 und Untertrum 18 der Bahn B (Fig. 1) der Trägerleiste 5 eine einfache Umlenkung möglich ist. Die Ansicht gemäß Fig. 4 verdeutlicht, daß die Förderbahn 16 im Zuführbereich 16' die mit der Bahn-Linie N gezeigte Neigung aufweist, mittels der die in den Schnecken 9, 9' zugeführten Flaschen 2' fortlaufend erfaßt (Pfeil Z, Fig. 3), in Laufrichtung Q mitgenommen und am Ende der Führungsleisten 10 (bei Position 30, Fig. 4) satzweise unterhalb der Trägerleiste 5 positioniert werden.

Die Aufnahmegabeln 15 der Kettenglieder 14 weisen eine in Arbeitsrichtung F der Füllanlage A offene Einführkontur 18 (Fig. 3) auf, mit deren Abstand S' das jeweilige Abstands-Stichmaß für die als Flaschen-Satz 4 zu gruppierenden Flaschen 2' vorgebbar ist. Die Draufsicht gemäß Fig. 3 verdeutlicht den Positioniervorgang, wobei die mittels eines Servomotors umlaufend angetriebenen Kettenglieder 14 der Übergabeeinheit 11 eine in Arbeitsrichtung F der Flaschenfüllanlage A bei der Schubbewegung (Pfeil Z) als Auflage wirksame Abstützung 20, beispielsweise in Form eines umlaufenden Riemenbandes, aufweisen (Fig. 4).

Die für eine Übernahme der mittels der Übergabeeinheit 11 positionierten Flaschen 2' vorgesehene Hubeinheit 8 ist mit einem mehrachsig verfahrbaren Greifer 21 versehen. Dieser Greifer 21 ist vorteilhaft so konzipiert, daß mit in zwei Reihen angeordneten Greifgliedern 22, 22' die Flaschenhälse 3 von zwei parallel zugeführten Flaschen-Sätzen 4 erfaßbar sind. Entsprechend erfolgt die synchrone Einführung dieser Flaschen-Sätze in die beiden nebeneinander befindlichen Trägerleisten 5. Mit diesem Konzept wird deutlich, daß gleichzeitig zwei gefüllte Trägerleisten 5 für einen Takt der Abfüllmaschine A bereitstellbar sind. Diese Doppel-Reihe von Flaschen 2 kann damit nach der Positionierphase während zumindest einer Taktphase beruhigt werden und der nachfolgende Abtransport der Transporteinheit erfolgt mit einer gegenüber dem Zuführtakt verdoppelten Frequenz im Bereich der Anlage A.

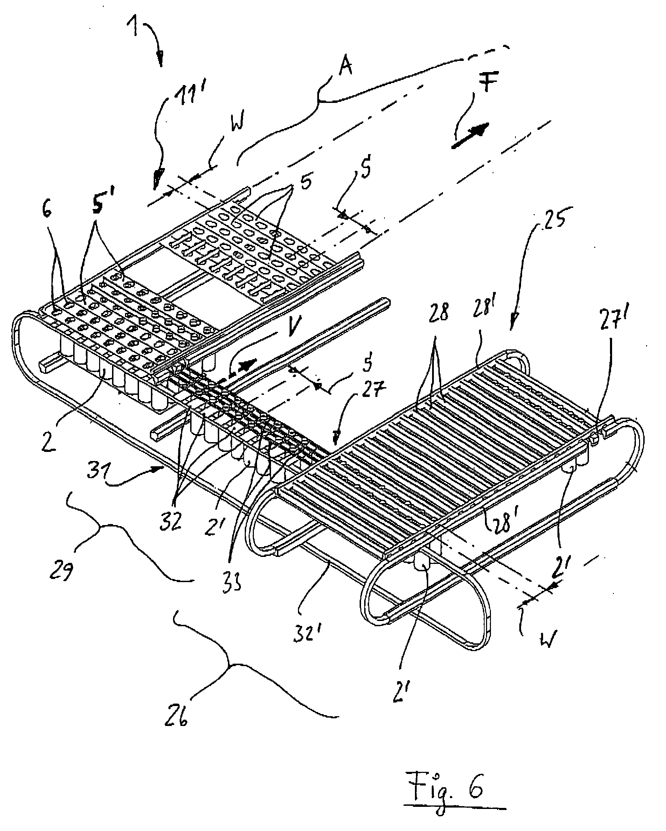

Die Greifglieder 22, 22' der beiden dargestellten, wahlweise in Funktion tretenden Greifer 21, 21' sind so ausgebildet, daß mit diesen die erfaßten Flaschen 2 quer zur Arbeitsrichtung F innerhalb der Trägerleisten 5 verlagerbar sind (Pfeil P, Fig. 2). Durch diese zusätzliche Bewegung wird die Verlagerung der Flaschen 2 in die Fixierstellung bewirkt. Denkbar ist auch, daß die Flaschen bei entsprechender Gestaltung der Aufnahmeöffnungen 6 (Fig. 6, bei 5') in oder entgegen der Arbeitsrichtung F fixiert werden (nicht dargestellt).

Es versteht sich, daß bei entsprechendem Steuerkonzept das Greifersystem bzw. die Hubeinheit 8 vier Bewegungen in drei Achsen ausführen kann. Dieses System besteht im wesentlichen aus einem oder zwei autark arbeitenden Linearachsensystemen mit Servoantrieben für die Bewegungen (Fig. 1 bis 4). In einer vertikalen Achsrichtung wird eine Abwärtsbewegung (entgegen Hub H') ausgeführt, die Greifer 22, 22' fahren durch die als Schlüssellöcher wirksamen Aufnahmeöffnungen 6 in die Trägerleisten 5 ein und mit pneumatischen Greifelementen wird die Flasche 2 am Flaschenkopf 3 aufgenommen. Danach fahren die als Oberführungen vorgesehenen Aufnahmegabeln 15 von den Flaschen 2 weg und geben die Flaschen 2 für den seitlichen Transport aus den Gabeln 15 frei. Die zweite Achse des Systems fährt mit der Bewegung der Trägerleiste 5 (Pfeil F) mit und zieht die Flasche 2 aus den Gabeln 15. Im Bereich der ersten Steuerachse wird nun die Hubbewegung H' ausgeführt und die Flaschen 2 werden in den Trägerleisten 5 positioniert. Anschließend wirkt eine dritte Achse des Systems, womit eine seitliche Bewegung (Pfeil P) erfolgt, um die Flaschen 2 in die Trägerleisten 5 zu drücken. Danach geben die pneumatischen Greifer 22, 22' die Flaschen 2 frei und die Achsen fahren wieder in ihre Ausgangspositionen zurück.

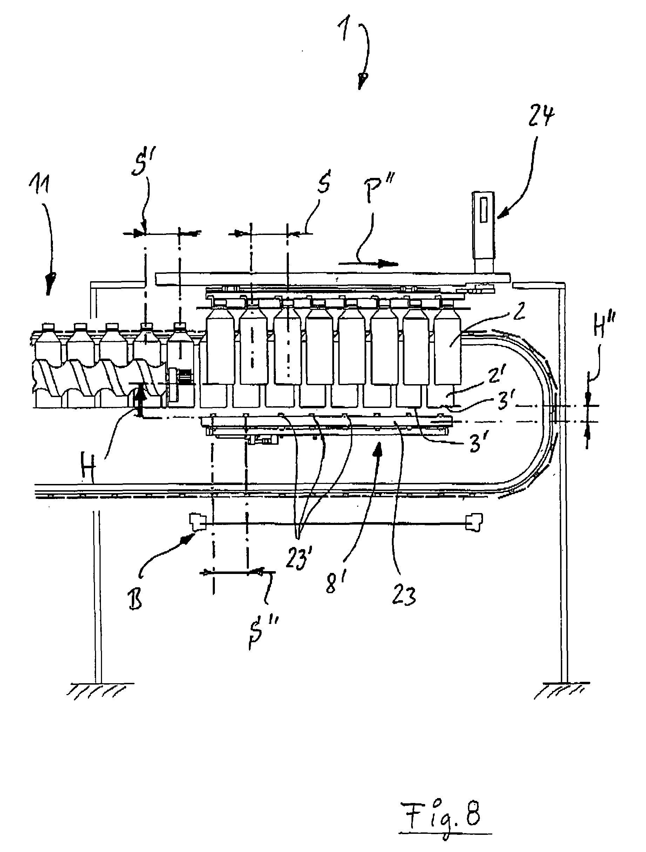

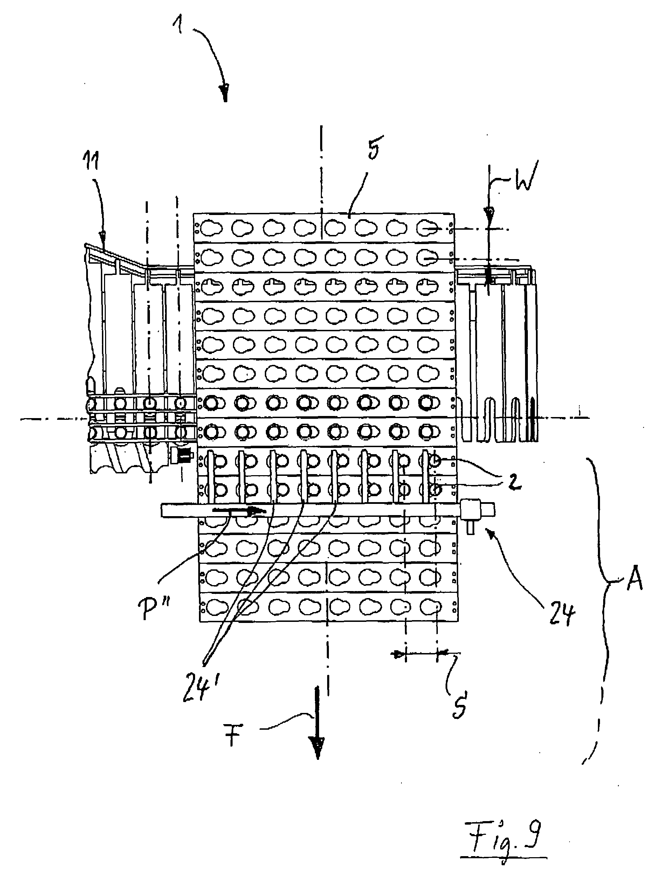

In Fig. 7 bis 9 ist ein zweites Hub-System 8' dargestellt, wobei eine Saugereinheit dargestellt ist, die fünf Bewegungen in drei Achsen ausführen kann. Zwei Achsen werden über einen Servomotor angetrieben. Entsprechend der Achse (Pfeil P") quer zur Laufrichtung (Pfeil F) werden die Flaschen 2 in die Trägerleisten 5 gedrückt, wobei eine Bewegungseinleitung über einen Pneumatikzylinder erfolgt. Eine weitere Bewegung ist vorgesehen, um eine als Bodengreifer vorgesehene Saugerplatte 23 im Bereich der Saugansätze 23' auf die entsprechende Flaschenhöhe einzustellen. Diese Bewegungsachse bewirkt auch die Bewegung zum Flaschenboden hin (Pfeil H", Fig. 8), so daß ein Saug-Vakuum geschaltet werden kann, um die Flaschen 2 fest auf die Saugerplatte 23 zu ziehen, ohne dabei die Gabeln 15 der Übergabeeinheit 11 zu belasten. Eine weitere Oberführung führt eine kleine Hubbewegung aus und gibt die Flaschen 2 für den seitlichen Transport (Pfeil P") frei. Die zweite Achse fährt die Flaschen 2 nun in Maschinenlaufrichtung (Pfeil F) aus den Gabeln 15 in Position direkt unterhalb der Trägerleisten 5. Die Bewegung gemäß der ersten Achse bewirkt die Hubbewegung H, so daß damit die Flaschen 2 durch die als Schlüsselloch wirksame Aufnahmeöffnung 6 in die Position gelangen (Fig. 9), aus der die vorbeschriebene Verlagerung innerhalb der Trägerleisten 5 auch in unterschiedliche Richtungen möglich ist. Die pneumatisch angetriebene Achse macht in der dargestellten Variante die Bewegung gemäß Pfeil P", so daß mit einem oberhalb der Trägerleiste 5 angebauten pneumatischen Puscher 24 die Flaschen 2 mittels jeweiliger Anlagestreben 24' in die Trägerleisten 5 gedrückt wird und damit der Abstand S gebildet ist (Fig. 9). Das Vakuum im Bereich der Saugplatte 23 wird abgeschaltet und die Achsen fahren in die Ausgangspositionen, um neue Flaschen 2' aufzunehmen.

In Fig. 6 ist eine zweite Ausführung der Übergabeeinheit 11' dargestellt, wobei ein als Band- oder Kettenförderer oder ein Air-Conveyer ausgebildeter Flaschenförderer 25 vorgesehen ist, und dieser die Flaschen 2' auf Stau (bei 27) transportiert. Dieser Band- oder Kettenförderer ist je nach Format in der Höhe einstellbar und besitzt verstellbare Seiten- und Mittelführungen. Der Air-Conveyer ist auf den jeweiligen Flaschenhals einstellbar. Die Flaschen 2' werden bis zu einem Flaschenstopp 27' an das erste Flaschenzuführsystem 26 transportiert. Der Flaschenstopp wird geöffnet, eine exakte Anzahl von Flaschen 2' wird in das Flaschenzuführsystem 26 gefördert und der Flaschenstopp 27' wird wieder geschlossen.

Dieses erste Flaschenzuführsystem 26 weist ein parallel zur Flaschenabfüllanlage A umlaufendes Profilsystem auf. Die einzelnen Profile 28 sind beispielsweise auf einer Kette 28 o. dgl. befestigt und haben den gleichen Teilungsabstand W wie die Trägerleisten 5 zueinander im Flaschenfüller A. Über den Flaschenförderer 25 werden die Flaschen 2' seitlich auf Stau bis zu einer Position 27 in das Flaschenzuführsystem 26 gefördert. Die Führung der Flaschen 2' erfolgt am Flaschenhals. Das System taktet weiter - neue Flaschen werden dem System zugeführt - und während des Taktens werden über Führungen, die am Flaschenhals oder an der Flasche greifen, die Flaschen 2' auf einen definierten Abstand (entsprechend dem Abstandsmaß S innerhalb einer Trägerleiste 5) gebracht und die Flaschen 2' fahren in ein zweites Flaschenzuführsystem 29.

Das zweite FlaschenzufUhrsystem 29 ist ein quer zum ersten und zum Abfüller A stehendes umlaufendes Profilsystem 31. Die einzelnen Profilleisten 32 sind auf einer Kette oder einem Zahnriemen 32' befestigt und besitzen den gleichen Abstand S wie das Stichmaß S innerhalb der Trägerleisten 5. Der Antrieb erfolgt über einen Servomotor. Die Befestigung der Leisten 32 ist einseitig, so daß auf der anderen Seite Flaschen 2' zugeführt und wieder entnommen werden können (Pfeil V, Fig. 6). In einem Takt werden nun aus dem ersten Flaschentransportsystem 26 die Flaschen 2' an das zweite Flaschentransportsystem 29 übergeben. Die Flaschenführung erfolgt ebenfalls am Flaschenhals. Im nächsten Takt werden die Flaschen 2' aus dem ersten Zuführsystem 26 geführt, durch einstellbare Oberführungen 33 seitlich geführt und in einem weiteren Takt direkt unterhalb der Trägerleisten 5 des Abfüllers A positioniert (Fig. 6, linke Seite). Die Verlagerung der Flaschen 2' in die Aufnahmeöffnungen 6 kann danach mit einem der Systeme 8, 8' gemäß Fig. 1 bis 4 bzw. Fig. 7 bis 9 erfolgen.

## Patentansprüche

1. Vorrichtung zum Transport von Flaschen, insbesondere PET-Flaschen (2, 2'), die im Bereich ihres Flaschenhalses (3) erfaßbar und einer Flaschenfüllanlage (A) o. dgl. Bearbeitungsstation zuführbar sind, wobei ein in einer Reihe gruppierte Flaschen (2') mit nach oben gerichteten Flaschenhälsen (3) aufweisender Flaschen-Satz (4) zu zellenbrettartig ausgebildeten Trägerleisten (5) o. dgl. Förderelementen hin verlagerbar und in deren jeweiligen Formausnehmungen aufnehmbar ist, derart, daß die auf einer Bahn (B) umlaufenden Trägerleisten (5) eine Transporteinheit mit den Flaschen (2) bilden, mittels eines Förderantriebes von der Füllanlage (A) in deren Arbeitsrichtung (F) übernehmbar und getaktet weiterförderbar sind, **dadurch gekennzeichnet, daß** die Flaschen (2') zum Verbinden mit der Trägerleiste (5) unterhalb dieser verlagerbar sind.

2. Vorrichtung nach Anspruch 1, **dadurch gekennzeichnet, daß** in den Trägerleisten (5) als Formausnehmungen jeweilige Aufnahmeöffnungen (6) mit geschlossener Randkontur vorgesehen sind.

3. Vorrichtung nach Anspruch 1 oder 2, **dadurch gekennzeichnet, daß** die Flaschen (2') in einer quer zur Arbeitsrichtung (F) der Füllanlage (A) ausgerichteten Reihe ausrichtbar, als an die Anzahl der Aufnahmeöffnungen (6) der Trägerleiste (5) angepaßter Flaschen-Satz (4) unterhalb der Trägerleiste (5) positionierbar, ausgehend von dieser Lage die Flaschenhälse (3) zumindest teilweise von der jeweiligen Aufnahmeöffnung (6) umfaßbar und die so gebildete Transporteinheit mit oberhalb der Trägerleiste (5) zugänglichen Flaschenhälsen (3) bzw. -öffnungen weiterbewegbar ist.

4. Vorrichtung nach einem der Ansprüche 1 bis 3, **dadurch gekennzeichnet, daß** die im Bereich der Aufnahmeöffnung (6) befindlichen Flaschenhälse (3) zumindest teilweise über der Randkontur der Aufnahmeöffnung (6) nach oben vorstehen.

5. Vorrichtung nach einem der Ansprüche 1 bis 4, **dadurch gekennzeichnet, daß** die Flaschen (2) jeweils im Bereich der Aufnahmeöffnung (6) der Trägerleiste (5) in einer transportsicheren Lage fixierbar sind.

6. Vorrichtung nach einem der Ansprüche 1 bis 5, **dadurch gekennzeichnet, daß** die Aufnahmeöffnungen (6) mit einem den hängenden Weitertransport der jeweiligen Flaschen (2) sichemden Formansatz (7) versehen sind.

7. Vorrichtung nach einem der Ansprüche 1 bis 6, **dadurch gekennzeichnet, daß** der als Querreihe (Pfeil C) zugeführte Flaschen-Satz (4) in zumindest einer Takt-Phase unter der Trägerleiste (5) gehalten ist.

8. Vorrichtung nach einem der Ansprüche 1 bis 7, **dadurch gekennzeichnet, daß** der Flaschen-Satz (4) im Bereich der Flaschenböden gehalten, dabei über den Flaschenhälsen (3) die jeweilige Trägerleiste (5) zuführbar und diese in die zumindest die Flaschenhälse (3) mit den Aufnahmeöffnungen (6) verbindende Transportstellung absenkbar ist.

9. Vorrichtung nach einem der Ansprüche 1 bis 7, **dadurch gekennzeichnet, daß** der unter der Trägerleiste (5) bzw. deren Aufnahmeöffnungen (6) positionierte. Flaschen-Satz (4) anhebbar (Pfeil H) und die Flaschenhälse (3) von unten in die Aufnahmeöffnungen (6) einführbar sind.

10. Vorrichtung nach einem der Ansprüche 1 bis 7, **dadurch gekennzeichnet, daß** der als Reihe ausgerichtete Flaschen-Satz (4) und die darüber befindliche Trägerleiste (5) durch gleichzeitige Hubbewegungen gegenläufig in die Verbindungsstellung verlagerbar sind,

11. Vorrichtung nach einem der Ansprüche 1 bis 7, **dadurch gekennzeichnet, daß** der unterhalb der Trägerleiste (5) im Bereich deren Aufnahmeöffnungen (6) zugeführte Flaschen-Satz (4) durch eine oberhalb der Trägerleiste (5) befindliche Hubeinheit (8) erfaßbar und mittels deren die Aufnahmeöffnungen (6) durchgreifende Glieder (22, 22') anhebbar ist (Pfeil H').

12. Vorrichtung nach einem der Ansprüche 1 bis 11, **dadurch gekennzeichnet, daß** die in den Bereich der Aufnahmeöffnungen (6) verlagerten Flaschen (2) bzw. Flaschenhälse (3) horizontal bewegbar (Pfeil P) und damit die Flaschenhälse (3) in eine jeweilige Fixierstellung überführbar sind.

13. Vorrichtung nach einem der Ansprüche 1 bis 12, **dadurch gekennzeichnet, daß** die quer zur Arbeitsrichtung (F) der Füllanlage (A) weitgehend ungeordnet zugeführten Flaschen (2) mittels einer Übergabeeinheit (11) als der Flaschen-Satz (4) gruppierbar, auf zumindest ein jeweiliges von den Aufnahmeöffnungen (6) der Trägerleiste (5) vorgegebenes Abstands-Stichmaß (S') einstellbar und unter der jeweiligen in Arbeitsrichtung (F) zugeführten Trägerleiste (5) positionierbar sind.

14. Vorrichtung nach Anspruch 13, **dadurch gekennzeichnet, daß** die Übergabeeinheit (11) einen die Flaschen (2') zumindest 1-reihig unter den Trägerleisten (5) positionierenden und auf einer Zuführbahn (N) verlagerbaren Förderer (12) aufweist.

15. Vorrichtung nach Anspruch 13 oder 14, **dadurch gekennzeichnet, daß** mit dem Förderer (12) der Übergabeeinheit (11) die zugeführten Flaschen (2') mehrreihig in den Übemahmebereich unter jeweilige Tragleisten (5) verlagerbar sind.

16. Vorrichtung nach einem der Ansprüche 13 bis 15, **dadurch gekennzeichnet, daß** der im Bereich der Übergabeeinheit (11) vorgesehene Förderer (12) jeweilige aneinandergereihte Kettenglieder (14) mit Aufnahmegabeln (15) aufweist, diese mit in Arbeitsrichtung (F) der Füllanlage (A) offener Einführkontur (18) versehen sind und mit diesen das jeweilige Stichmaß (S, S') für die Flaschen (2) vorgebbar ist.

17. Vorrichtung nach Anspruch 16, **dadurch gekennzeichnet, daß** die umlaufenden Kettenglieder (14) der Übergabeeinheit (11) auf einer in Arbeitsrichtung (F) der Flaschenfüllanlage (A) eine Schubbewegung (Pfeil Z) bewirkenden Führungsbahn (16) verlagerbar sind.

18. Vorrichtung nach einem der Ansprüche 1 bis 17, **dadurch gekennzeichnet, daß** die Hubeinheit (8) für die zugeführten Flaschen (2) zumindest einen mehrachsig verfahrbaren Greifer (21, 21') aufweist, dessen in zwei Reihen angeordnete Greifglieder (22, 22') die Flaschenhälse (3) zweier zugeführter Flaschen-Sätze (4) erfassen und in die Trägerleisten (5) einführen, derart, daß gleichzeitig zwei gefüllte Trägerleisten (5) für einen jeweiligen Vorschub-Takt der Abfüllmaschine (A) bereitstellbar sind.

19. Vorrichtung nach Anspruch 18, **dadurch gekennzeichnet, daß** die Greifglieder (22, 22') des Greifers (21, 21') quer zur Arbeitsrichtung (F) der Flaschenabfüllanlage (A) verlagerbar sind (Pfeil P).

20. Vorrichtung nach einem der Ansprüche 1 bis 17, **dadurch gekennzeichnet, daß** die in die Übergabeeinheit (11) zugeführten Flaschen (2) von einer deren Flaschenboden (3') erfassenden Hubeinheit (8') in Form eines Bodengreifers (Hub H") übernehmbar, auf dessen Saugerplatte (23) die Flaschen (2) fixierbar und in die jeweiligen Aufnahmeöffnungen (6) mittels der Hubbewegung (H) überführbar sind.

21. Vorrichtung nach Anspruch 20, **dadurch gekennzeichnet, daß** die Hubeinheit (8') mit einer über den Trägerleisten (5) vorgesehenen Schiebevorrichtung (24) in form eines pneumatischen Puschers o. dgl. zusammenwirkt.

22. Vorrichtung nach einem der Ansprüche 13 bis 21, **dadurch gekennzeichnet, daß** als Übergabeeinheit (11') ein mehrteiliges Fördersystem (26, 29') vorgesehen ist, das eine Gruppiereinheit (25) und eine aus dieser die auf Stichmaß (S) sortierten Flaschen (2) übernehmende Satzeinheit (31) aufweist.
